# EUROPEAN PATENT SPECIFICATION

(11) **EP 0 476 980 B1**
(45) Date of publication and mention of the grant of the patent: **09.04.1997**
(21) Application number: 91308484.4
(22) Date of filing: 17.09.1991
(51) Int. Cl.: G01N 27/333, G01N 27/409, G01N 33/18, G01N 27/49

(54) **Oxygen electrode and process for the production thereof**
Sauerstoffelektrode und Verfahren zu deren Herstellung
Electrode d'oxygène et son procédé de fabrication

(30) Priority: 17.09.1990 JP 243849/90; 24.06.1991 JP 151573/90
(43) Date of publication of application: 25.03.1992
(73) Proprietor: FUJITSU LIMITED, Kawasaki-shi, Kanagawa 211 (JP)
(72) Inventor: Suzuki, Hiroaki, c/o FUJITSU LIMITED, Kawasaki-shi, Kanagawa 211 (JP); Sugama, Akio, c/o FUJITSU LIMITED, Kawasaki-shi, Kanagawa 211 (JP); Kojima, Naomi, c/o FUJITSU LIMITED, Kawasaki-shi, Kanagawa 211 (JP)
(74) Representative: Silverman, Warren

(56) References cited:
- EP-A- 0 100 667
- EP-A- 0 284 518
- SENSORS AND ACTUATORS, vol.B2, no.3, August 1990, LAUSANE CH pages 185 - 191, XP142562 SUZUKI ET AL. 'Development of a miniature Clark-type Oxygen Electrode Using Semiconductor Techniques and its improvement for practical Applications.'
- FUJITSU SCIENT. & TECNICAL JOURNAL, vol.25, no.1, 1989, KAWASAKI, JP pages 52 - 58, XP111746 H.SUZUKI 'Clark-type Oxygen Electrode and Biosensor Fafricated by Semiconductor Techniques.'
- PATENT ABSTRACTS OF JAPAN vol. 10, no. 183 (P-472) 26 June 1986 & JP-A-61 030 756 (FUJITSU LTD.)

## Description

The present invention relates to an oxygen electrode and a process for the preparation thereof. More particularly, the present invention relates to a small oxygen electrode fabricated by utilizing a micro-machining technique and a process for the preparation thereof.

Oxygen electrodes are advantageously used for measuring the dissolved oxygen concentration of a sample. For example, the dissolved oxygen concentration can be used to determine the biochemical oxygen demand (BOD) in water, which is measured from the viewpoint of maintenance of the water quality.

Furthermore, in the fermentation industry, in order to advance alcoholic fermentation in a fermenter at a high efficiency, it is necessary to adjust the dissolved oxygen concentration in the fermenter. A small oxygen electrode can be used for measuring this dissolved oxygen concentration. Moreover, a small disposable oxygen sensor is demanded in the medical field. Still further, a small oxygen electrode can be combined with an enzyme to construct an enzyme electrode, which can be used for measuring the concentration of a saccharide or an alcohol. For example, glucose reacts with dissolved oxygen in the presence of the enzyme glucose oxidase to form gluconolactone. By utilizing the phenomenon that the amount of dissolved oxygen diffused in an oxygen electrode cell is reduced by this reaction, the glucose concentration can be determined from the amount of dissolved oxygen consumed.

As can be seen from the foregoing, the small oxygen electrode can be used in various fields such as environmental instrumentation, the fermentation industry and clinical medical treatment, especially in the case where the small oxygen electrode is attached to a catheter and is inserted into the body.
Because the electrode is small, disposable and cheap, the utility value is very high.

Because the size of commerically available oxygen electrodes cannot be reduced and mass production is impossible, the present inventors developed a new small oxygen electrode fabricated by the lithographic and anisotropic etching techniques (see United States Patent US-A-4975175 corresponding to Japanese Patent Application No. 62-71739, Japanese Unexamined Patent Publication No. 63-238548). Figs. 7 to 9 of the accompanying drawings illustrate this small oxygen electrode. The oxygen electrode has a structure in which two electrodes, that is, an anode 4 and a cathode 5, are formed on a hole 2 formed on a silicon substrate 1 by anisotropic etching through an insulating film 3 An electrolyte-containing liquid 6 is contained in this hole and finally, the top surface of the hole is covered with a gas-permeable (membrane) film 7. In the drawings, reference numeral 8 represents the part of the electrode at which detection takes place (responding part) and reference numeral 9 represents a pad for electrical connection. This small oxygen electrode is small in size and the dispersion of characteristics is small. Moreover, since mass production is possible, the manufacturing cost is low.

Thus, conventional small oxygen electrodes have been improved almost to a practically applicable level by making improvements to materials used for the fabrication thereof. However, there are still some unsolved problems in preparing small oxygen electrodes along a manufacturing line and marketing them, as described below.
(1) In many cases, it is difficult to selectively form an electrolyte layer and a gas-permeable layer. Accordingly, the number of operations conducted for each chip is increased and the productivity is consequently reduced. Therefore, the price of the small oxygen electrode rises.
(2) The operation of forming an electrode pattern from above the hole formed by anisotropic etching toward the bottom becomes difficult as the step depth increases. Therefore, the precision of formation of the pattern is reduced and special means,such as lap baking become necessary. Accordingly, the fabrication is very troublesome.
(3) In conventional small oxygen electrodes, since the gas-permeable film is directly formed on the responding part, an electrode infiltrated into a gel or a polymeric solid electrolyte is used. However, it is difficult to regulate precisely the quantity of the electrolyte and bad influences are imposed on the dispersion of characteristics.
(4) A gas-permeable film was formed at the outset by dip coating or spin coating a liquid material. Most materials used for such gas-permeable films (silicone resins and the like) deteriorate with the lapse of time because storage stability cannot be guaranteed.
(5) It is sufficient if the gas-permeable film is spread only in the vicinity of the working electrode. However, in the above-mentioned oxygen electrode, where only one silicon substrate is used as the substrate, the gas-permeable film should also be formed on an irrelevant portion such as an anode region, and the gas-permeable film is readily damaged.

In the field of semiconductor manufacture or micro-machining, it is demanded that a fluorine resin film, for example, as a gas-permeable film or an insulating material, should be tightly bonded to a silicon wafer or a glass substrate, as in the case of a small Clark cell (barrier membrane type) fabricated by utilizing the micro-machining technique.

In the production of a small oxygen electrode, for example, a small oxygen electrode disclosed in United States Patent US-A-4975175 corresponding to Japanese Unexamined Patent Publication No. 63-238548, formation of a gas-permeable film is accomplished by forming a water-repellant polymer film by dip coating or spin coating and, in the latter case, bonding a fluorine type FEP film by heat fusion. The process disclosed in Japanese Unexamined Patent Publication No. 63-238548 is simple, but the process is defective in that it is generally difficult to reconcile the selective formation of a film pattern and increase of the film strength.

A method of bonding a fluorine resin as an insulating material to a silicon wafer or a glass substrate is known in which fusion bonding is carried out at the melting temperature of the fluorine resin (about 280°C). However, the film formed by this method is readily peeled because of the incorporation of bubbles at fusion bonding, a change in temperature or friction, and the resistance to wetting with water is very low.

In the case where a biosensor such as a small sensor is used in the medical field, the sensor should be subjected to high-pressure vapor sterilization in advance. Peeling of the gas-permeable film is frequently caused at this high-pressure vapor sterilization, and this is a very serious practical problem.

Embodiments of the present invention aim to provide an oxygen electrode and a process for the preparation of an oxygen electrode by which the foregoing problems can be solved.

In accordance with a first aspect of the present invention, there is provided an oxygen electrode comprising: a flat electrode substrate having at least two electrodes thereon, one of the electrodes being a working electrode; and a gas-permeable film,
characterised by a container substrate which is bonded to said flat electrode substrate and has recesses formed therein at positions corresponding to the positions of the respective electrodes for containing an electrolyte therein, the recess at the position corresponding to the position of said working electrode having an aperture extending to the exterior of the container substrate opposite to the flat electrode substrate, said gas-permeable film covering said aperture.

In accordance with a second aspect of the present invention, there is provided a process for the preparation of an oxygen electrode, which comprises: bonding a flat electrode substrate having at least two electrodes thereon, one of the electrodes being a working electrode, to a container substrate having recesses at positions corresponding the positions of the respective electrodes, the recess at a position corresponding to the position of said working electrode having an aperture extending to the exterior of the container substrate opposite to the flat electrode substrate; covering said aperture with a gas-permeable film; and introducing an electrolyte into said recesses.

As pointed out hereinbefore, the size of the oxygen electrode is very small, and the basic technique of micro-machining is adopted for the preparation of this small oxygen electrode.

The process of certain embodiments of the present invention utilizing this basic technique is characterized by the following features.
(1) Two substrates are used, and respective substrates are independently processed and bonded together to complete the oxygen electrode.
(2) The step of forming an electrolyte is omitted. Namely, the electrolyte is not charged by the manufacturer of the small oxygen electrode, but is injected by a user just before using.
(3) Electrode patterns of a working electrode, a reference electrode, a counter electrode and the like are formed with no deep steps, but they are formed on a substantially plane or flat substrate.
(4) A through hole or aperture is formed only at a part of the working electrode and a gas-permeable film is coated only at this part.
(5) The gas-permeable film is bonded by heat fusion bonding or the like.

The oxygen electrode of the present invention can be fabricated by bonding the electrode substrate and the container substrate.

At least two electrodes, that is, a working electrode and a counter electrode, are formed on the flat electrode substrate.

In case of a two-electrode structure, there are formed a cathode and an anode, and the cathode acts as the working electrode and the anode acts as the counter electrode.

The cathode and anode can be varied according to whether the electrode to be manufactured is of the polaro-type or of the galvanize type. For example, in the production of an oxygen electrode of the polaro-type, both the electrodes are gold electrodes or platinum electrodes, or an anode is constructed as the reference electrode, and a voltage is applied between both the electrodes for measurement. In case of an oxygen electrode of the polaro-type, a neutral aqueous solution such as a 0.1 M aqueous solution of potassium chloride that hardly corrodes the silicon container portion is preferably used as the electrode. Furthermore, if an electrode of a metal more chemically reactive than gold or platinum, such as lead or silver, is used as the anode side electrode, an electrode of gold, platinum or the like is used as the cathode side electrode and an alkaline aqueous solution such as a 1 M aqueous solution of potassium hydroxide is used as the electrolyte, a galvanic oxygen electrode can be prepared.

In case of a three-electrode structure, a reference electrode is further formed, and the working electrode and counter electrode are gold or platinum electrodes,and a silver/silver chloride electrode or the like is preferably used as the reference electrode. These electrodes can be advantageously formed by a film-forming method such as vacuum evaporation deposition or sputtering.

Various solutions,such as an aqueous solution of potassium chloride, an aqueous solution of potassium hydroxide and an aqueous solution of sodium sulfate,can be used as the electrolyte.

It is indispensable that the gas-permeable film should be hydrophobic and should not allow permeation of an aqueous solution. It also is important that the gas-permeable film should be bonded tightly with a good adhesion to a silicon substrate or a silicon oxide substrate by heat fusion bonding or the like. FEP and silicone varnish films are preferably used as the gas-permeable film.

preferred embodiments of the oxygen electrode of the present invention will now be described.

The flat electrode substrate may have, additionally, a reference electrode thereon, a recess being formed in the container substrate at a position corresponding to the position of the reference electrode for containing an electrolyte.

The electrodes formed on the flat electrode substrate are preferably separated from one another to such an extent that they are not influenced by products formed on the surfaces of the respective electrodes.

As preferred examples of the material constituting the flat electrode substrate, there can be mentioned a Pyrex glass substrate, a lead glass substrate, a silicon substrate having a film of a Pyrex glass-containing borosilicate glass formed on the surface thereof, a silicon substrate having a lead glass film formed on the surface thereof, a glass substrate having a film of a Pyrex glass-containing borosilicate glass formed on the surface thereof, a glass substrate having a lead glass film formed on the surface thereof, and a silicon substrate having a thermally oxidized film on the surface thereof.

Each electrode preferably is formed at one end for connection to a socket terminal or the like of an IC. Such an end for connection is referred to hereinafter as a 'pad'.

A semiconductor substrate, especially a silicon substrate, is advantageously used as the material of the container substrate. A (100) plane silicon substrate is especially preferably used as the silicon substrate.

When a silicon substrate is used, as insulating film can be formed by a silicon oxide film or the like. For example, when the substrate is composed of silicon, a silicon oxide film can be easily formed by thermal oxidation of the substrate. A silicon nitride film has very good properties as an insulating film, but since anode junction (bonding) is impossible, the silicon nitride film cannot be used for the junction surface.

Respective recesses may be connected to one another by means of conduits for passage of electrolyte.

Furthermore, in the oxygen electrode of the present invention, it is preferred that the electrodes be formed in shallow grooves etched on the flat electrode substrate.

Preferably, the aperture opens into a recess formed in the surface of the container substrate opposite to the flat electrode substrate, which recess is covered with the gas-permeable film. If this structure is adopted, the distance between the gas-permeable film and the working electrode becomes much shorter and the sensitivity of the oxygen electrode per se can be improved.

A fluorine resin film, in particular a fluoroethylene polymer (FEP) such as a tetrafluoroethylene/hexafluoroethylene copolymer film, is preferably used as the gas-permeable film, and the thickness of this film is preferably smaller than 20 µm.

A gold electrode, a platinum electrode, a carbon electrode and the like are preferably used as the working electrode (cathode). Similarly, a gold electrode, a platinum electrode, carbon electrode and the like are preferably used as the counter electrode (anode). Furthermore, a silver/silver chloride electrode is preferably used as the reference electrode.

An aqueous solution of potassium chloride, an aqueous solution of potassium hydroxide and the like are preferably used as the electrolyte.

The small oxygen electrode of the present invention is used in the state where a certain voltage negative to the counter electrode (anode) or the reference electrode is applied to the working electrode (cathode). In the state where the responding part of this small oxygen electrode is immersed in a buffer solution, dissolved oxygen permeates through the gas-permeable film and arrives at the working electrode (cathode) where reduction is effected. If the value of a current generated at this point is measured, the dissolved oxygen can be known with the current value as a criterion.

The method of bonding a fluorine resin film as used in certain embodiments of the process of the present invention will now be described in detail.

As the result of research made with a view to solving the above-mentioned problems of bonding fluorine resin films, the present inventors found that the problems can be solved by two means described below.

According to the first means, the surface of a fluorine resin or the surface of the substrate, generally a silicon wafer, is chemically modified to form a chemical bond between them, whereby the bonding force is increased.

A fluorine resin is characterised in that it has no reactivity, but if fluorine present in the surface portion is isolated and the surface is treated with a silane coupling agent, a chemical bond is formed between the fluorine resin and the substrate, and tight bonding becomes possible.

Namely, the first means is characterized in that the surface of the fluorine resin film is treated with an agent containing metallic sodium, the surface is then treated with a silane coupling agent and the treated fluorine resin film is fusion-bonded to the substrate by heating. Alternatively, the surface of the substrate is treated with a silane coupling agent and the fluorine resin film is fusion-bonded to the treated substrate by heating. In the latter method, a fluorine resin film treated with an agent containing metallic sodium, or a fluorine resin film treated with an agent containing metallic sodium and then treated with a silane coupling agent can be used as the fluorine resin film.

The second means is to cope particularly with the latter problem described hereinbefore.

It was found that,at the fusion bonding of a fluorine resin film, air bubbles are left between the fluorine resin film and the substrate which reduces the bonding area between the film and the substrate. In addition, at the high-pressure vapor sterilization, the bubbles inflate to cause peeling of the film. It also was found that this problem of peeling can be solved by removing the air bubbles in vacuo or by carrying out the operation in vacuo throughout the fusion bonding.

The above mentioned second means is characterized in that the surface of the fluorine resin film is treated with an agent containing metallic sodium and is then treated with a silane coupling agent, the treated fluorine resin film is fusion-bonded to the substrate by heating, the fusion-bonded substrate is allowed to stand in vacuo, the fusion-bonded substrate is placed under atmospheric pressure and the substrate is fusion-bonded again, and/or that the surface of the fluorine resin film is treated with an agent containing metallic sodium and is then treated with a silane coupling agent, the treated fluorine resin film is fusion-bondedto the substrate in vacuo by heating, the fusion-bonded substrate is allowed to stand in vacuo and the fusion bonding is then repeated in vacuo again.

In embodiments of the present invention relating to bonding a fluorine resin film, the term "substrate" means a silicon wafer, a glass substrate and the like, and by "silane coupling agent" means silicone compounds such as γ-APTES (γ-aminopropyltriethoxysilane) and hexamethyldisilazane.

For a better understanding of the invention, and to show how the same may be carried into effect, reference will now be made, by way of example, to the accompanying drawings, in which:-
Fig. 1 is a plan view showing a small oxygen electrode according to one embodiment of the present invention;
Fig. 2(A) is a section cut along line II-II in Fig. 1;
Fig. 2(B) is a section cut along line I-I in Fig. 1.
Fig. 3 is a plan view showing an electrode substrate constituting the oxygen electrode shown in Fig. 1;
Fig. 4 is a plan view showing a container substrate constituting the oxygen electrode shown in Fig. 1;
Figs. 5(a) to 5(g) are diagrams showing steps in the preparation of the oxygen electrode shown in Fig. 1;
Fig. 6 is a diagram showing a calibration curve of the small oxygen electrode of the present invention;

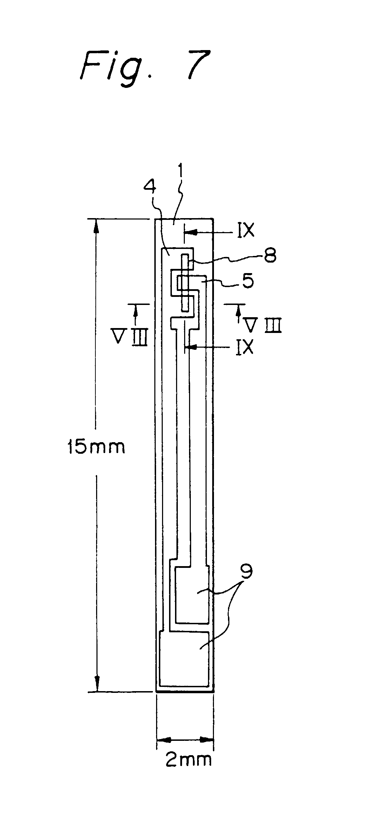

Fig. 7 is a plan view showing a conventional oxygen electrode;

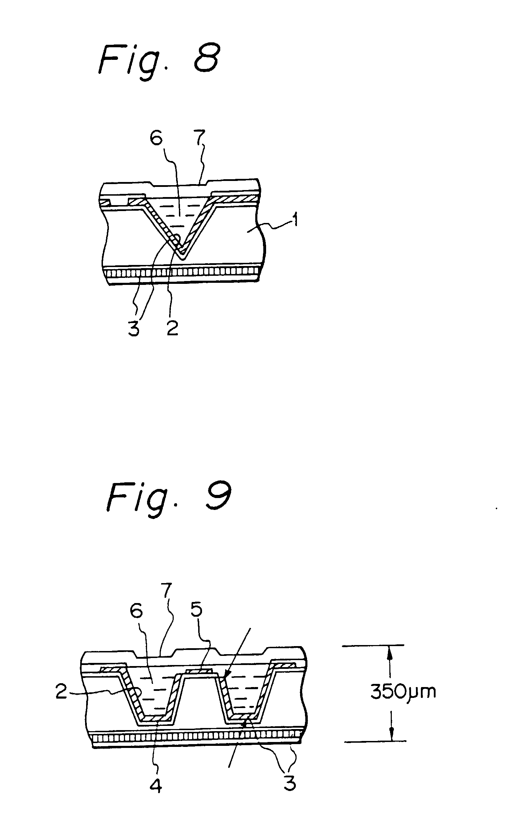

Fig. 8 is a section taken along line VIII-VIII in Fig. 7.
Fig. 9 is a section taken along line IX-IX in Fig. 7.

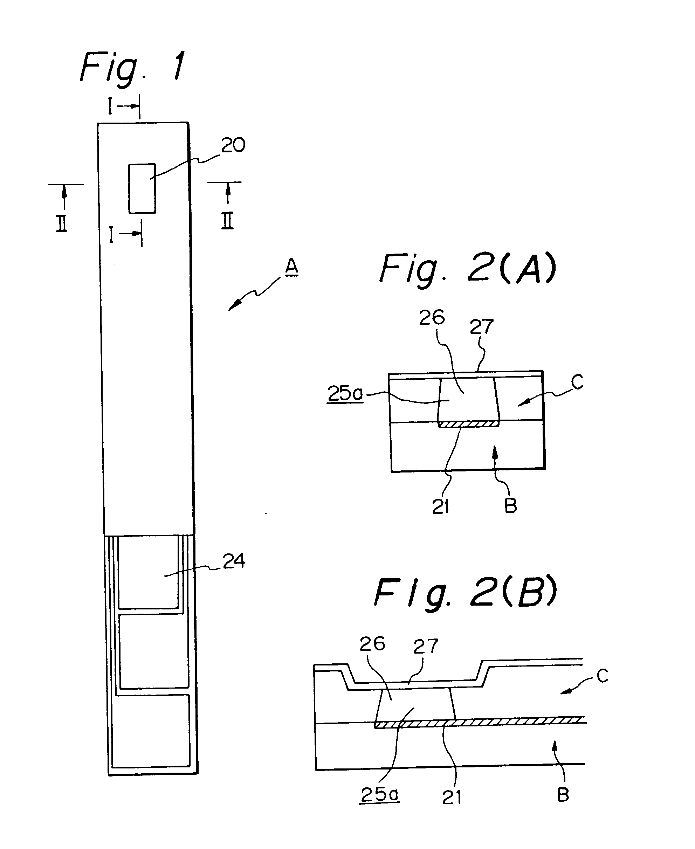

To begin with, one preferred embodiment of the process for the preparation of a small oxygen electrode according to the present invention will be described with reference to Figs. 1 to 4 of the accompanying drawings.

The oxygen electrode A has a rectangular shape, and includes a responding part (working electrode portion) which is covered with a gas-permeable film 20 and,for connection to accessory devices, parts of a working electrode 21, a counter electrode 22 and a reference electrode 23 are exposed to form a pad 24. The illustrated oxygen electrode can have a two-electrode structure comprising only the working electrode 21 and a counter electrode 22. Alternatively, a three-electrode structure further comprising a reference electrode 23 composed of a silver/silver chloride electrode can be adopted.

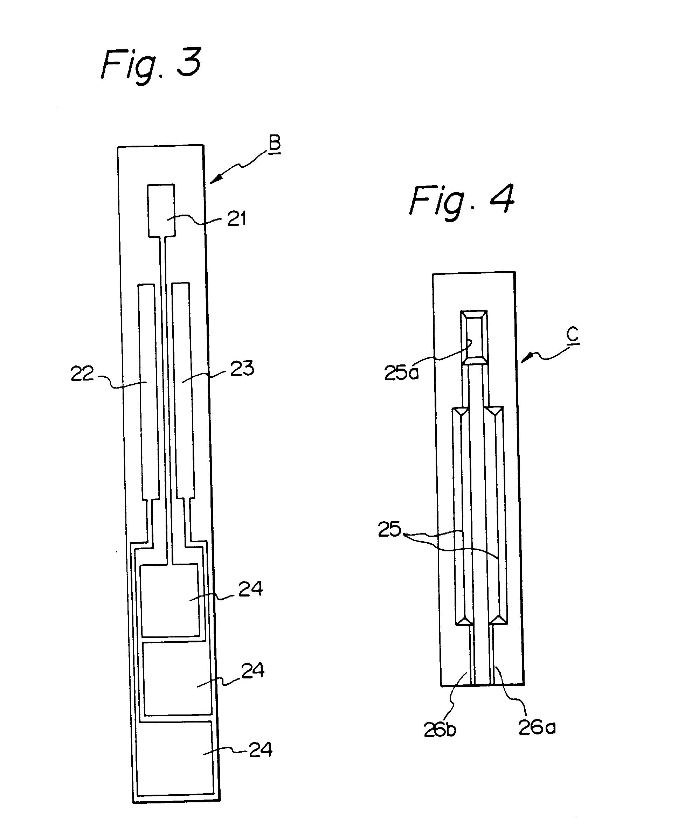

The structure of the small oxygen electrode shown in Fig. 1 will be readily understood from Figs. 3 and 4. More specifically, the working electrode 21, counter electrode 22 and reference electrode 23 are formed on a glass electrode substrate B. Dents 25 for storing an electrolyte 26 are formed on a silicon container substrate C by anisotropic etching at positions corresponding to the working electrode 21, counter electrode 22 and reference electrode 23. The dent 25a at the position corresponding to the working electrode 21 is formed to pierce through the silicon substrate 32 to the opposite side thereof for the formation of a gas-permeable film 27. Namely, the gas-permeable film 27 is formed on the top face of the dent 25a (see Fig. 2(A)). Respective holes are connected to one another through fine grooves. An electrolyte, for example, 0.1 M KCl, is filled in the dents of the container substrate C after the fabrication of the electrode, and injection grooves 26a and 26b are formed in the vicinity of the pad 24 for injecting this electrolyte into fine holes.

The oxygen electrode A is fabricated by bonding the electrode substrate B and the container substrate C together so that the electrodes formed on the electrode substrate B oppose the respective dents formed in the container substrate C. Fig. 2 shows the section II-IIof the thus -fabricated oxygen electrode A.

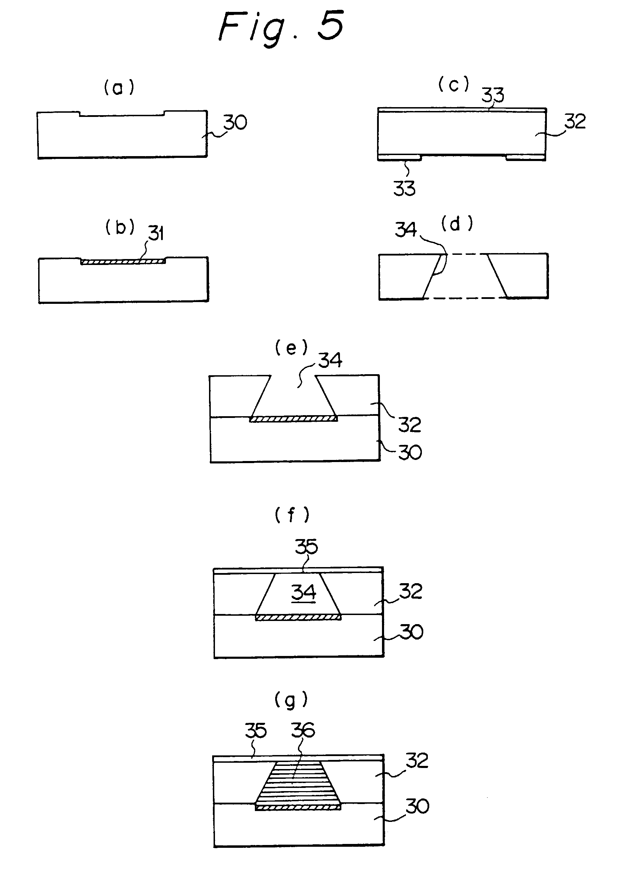

The small oxygen electrode shown in Fig. 1 can be advantageously prepared according to the process steps shown in sequence in Fig. 5. In the description below, for case of understanding, the formation of one oxygen electrode on a wafer is described. However, it should be noted that in practice, many small oxygen electrodes are simultaneously formed on a wafer. In Fig. 5, only the vicinity of the working electrode is illustrated, but it should be noted that other electrode portions are similarly formed.

### (I) Preparation of Electrode Substrate

(1) A negative photoresist film having the same pattern as that of a working electrode (cathode), a counter electrode (anode) and a reference electrode, to be formed afterwards,is formed on a so-called 2-inch Pyrex glass (Iwaki Glass 7740) substrate 30 in such a manner that the glass is exposed in areas where the electrodes are to be formed.
(2) The same negative photoresist is coated on the entire back surface of substrate 30 to form a wafer and baking is carried out at 150 C for 30 minutes.
(3) The wafer is immersed for 1 hour in a mixed solution comprising 50% fluoric acid, concentrated nitric acid and 40% ammonium fluoride at a ratio of 1/1/8 to etch the exposed glass. The etching depth is 3 µm.
(4) The negative photoresist film formed in the steps (1) and (2) is peeled in a mixed solution comprising sulfuric acid and hydrogen peroxide at a ratio of 2/1 [see Fig. 5(a)].
(5) The substrate is sufficiently washed with a mixed solution of hydrogen peroxide and ammonia and then with pure water, and is then dried.
(6) A gold film is formed on the substrate by vacuum evaporation deposition. Since the adhesion between gold and glass is very poor, a thin chromium layer is interposed to improve the adhesion. The thickness of the chromium layer is 40 nm and the thickness of the gold layer is 400 nm.
(7) A positive photoresist film (OFPR-5000 supplied by Toyo Oka) is formed on the gold-deposited surface of the substrate.
(8) By using the same pattern as used in step (1), a working electrode (cathode) pattern and a counter electrode (anode) pattern are formed.
(9) The resist pattern-formed substrate is immersed in a gold-etching solution formed by dissolving 4 g of KI and 1 g of I₂ in 40 ml of water to remove the exposed gold portion by etching. Then, the substrate is washed with pure water and the resist is removed by acetone.
(10) The substrate is immersed in a chromium-etching solution formed by dissolving 0.5 g of NaOH and 1 g of K₃Fe(CN)₆ in 4 ml of water to remove the exposed chromium portion.
(11) The substrate is sufficiently washed with pure water and is then dried.
   In case of a two-electrode system comprising gold electrodes alone, the preparation in complete at the above step. However, in case of a three-electrode system, a reference electrode is formed through the following further steps.
(12) Silver is vacuum-deposited at a thickness of 400 nm on the substrate obtained in step (11). In view of the adhesion, it is preferred that in step (11), the pattern of gold also be formed on the portion of the reference electrode. In the case where the gold pattern is located below, the Cr layer interposed in step (6) becomes unnecessary.
(13) A positive photoresist is coated on the surface of the substrate and, after baking, light exposure and development, a photoresist pattern is formed only at the part of the substrate where the reference electrode is to be formed.
(14) The entire substrate is immersed in a mixed solution comprising 29% ammonia, 31% hydrogen peroxide and pure water at a ratio of 1/1/20 to etch the silver.
(15) The substrate is sufficiently washed with pure water, and the entire substrate is immersed for 10 minutes in a 0.1 M solution of FeCl₃ to form a thin layer of silver chloride on the surface of the silver.
(16) The entire substrate is sufficiently washed with pure water.
   Formation of the electrode substrate is completed by steps (1) to (16) [see Fig. 5(b)]. Incidentally, in Fig. 5(b), reference numeral 31 represents the working electrode (cathode).

### (II) Preparation of Container Substrate

(1) A 2-inch (100) plane silicon wafer 32 having a thickness of 350 µm is prepared, and the wafer is washed with a mixed solution of hydrogen peroxide and ammonia and with concentrated nitric acid.
(2) The silicon wafer 32 is subjected to wet thermal oxidation at 1050°C for 200 minutes to form an SiO₂ film 33 having a thickness of 1.0 µm on the entire surface thereof.
(3) A negative photoresist (OMR-83 supplied by Tokyo Oka) having a viscosity of 60 cP is coated on the smooth surface of the silicon substrate, and light exposure, development and rinsing are carried out to form a resist pattern for etching on the wafer.
(4) The wafer is immersed in a mixed solution comprising 50% fluoric acid and 40% ammonium fluoride at a ratio of 1/6 to etch the exposed SiO₂ portion [see Fig. 5(c)].
(5) The negative photoresist film formed by steps (1) and (2) is peeled in a mixed solution comprising sulfuric acid and hydrogen peroxide at a ratio of 2/1.
(6) The substrate is immersed in 35% KOH maintained at 80°C to effect anisotropic etching of silicon and form dents corresponding to the electrode patterns prepared in the process (I). When the dent patterns are complicated, steps (1) to (6) are repeated a number of times. Finally, a container substrate having electrolyte-storing cavities at positions corresponding to the counter electrode and reference electrode, and a through hole 34 at the position corresponding to the working electrode is obtained.
(7) If SiO₂ used as the mask is left on the surface on the silicon, because higher temperature is necessary for the anode bonding (III) described below, SiO₂ is completely removed in the etching solution used in step (4).

The electrolyte-storing container substrate is completed by steps (1) to (7) [see Fig. 5(d)].

### (III) Bonding of Electrode Substrate and Container Substrate

(1) The electrode substrate completed by process (I) is subjected to ultrasonic washing in pure water, and the electrolyte-storing container substrate completed by process (II) is sufficiently washed with an aqueous solution of hydrogen peroxide/ammonia and with pure water.
(2) Alignment of the pattern of the electrode-forming surface, obtained in the process (I), with the pattern of the surface having dents formed thereon by etching in the process (II) is carried out in a clean atmosphere.
(3) A voltage of 1200 V is applied between the substrates at a temperature of 250°C to effect anodic bonding between the electrode substrate and the container substrate, so that the electrode substrate is located on the negative side [see Fig. 5(e)].

### (IV) Formation of Gas-Permeable film

(1) A gas-permeable film [for example, FEP film having a thickness of 12 µm (supplied by Toray)] is cut to an appropriate size on the surface of the container substrate opposite to the bonded surface, at the portion where the through hole is formed.
(2) The substrate is then heated to a temperature where FEP melts, whereby the FEP film is bonded to the substrate [see Fig. 5(f)].

### (V) Cut-Out of Substrate

(1) The substrate having many oxygen electrodes formed thereon is cut out into chips by a dicing saw.

### (VI) Injection of Electrolyte

When the size of holes formed within the small oxygen electrode is small, injection of the electrolyte can be accomplished by immersing the small oxygen electrode in 0.1 M KCl and placing the entire electrolyte under a reduced pressure. If injection is difficult by this method, the following operation s are carried out to facilitate injection of electrolyte.
(1) The electrolyte is filled in a beaker, and the portion of the small oxygen electrode having the electrolyte-injecting groove is placed in the electrolyte, with the gas-permeable film placed in the gas phase. In this state, the electrolyte and the beaker are placed in a sealed container and deaerationof the container is carried out by a vacuum pump.
(2) After the container has been allowed to stand still for a while, air is abruptly introduced into the container substrate. By this operation, electrolyte 36 is introduced at a time to the point where the gas-permeable film is present.
(3) In the case wherein bubbles are left in the portion of the gas-permeable film, the above operations (1) and (2) are repeated.

For injection of the electrolyte, there can also be adopted a method in which sodium alginate containing the electrolyte is charged in the dents and through hole of the oxygen electrode, the entire oxygen electrode is immersed in an aqueous solution of calcium chloride to fill the aqueous solution into the dents and through hole and to gelthe sodium alginate to calcium alginate, and the oxygen electrode is immersed in the above aqueous solution of the electrolyte, whereby the electrolyte is sufficiently filled into the oxygen electrode. If the dents are too long to gel the sodium alginate in a short time, the procedure can be reversed. Namely, the dents and throughhole are first charged with calcium chloride solution, the entire electrode is baked to evaporate water in the solution, and then sodium alginate solution containing the electrolyte is charged into the cavity to obtain the gel. Alternatively, the oxygen electrode is immersed in a fused agarose gel containing the electrolyte, and the gel can be introduced into the dents and through hole in the interior of the oxygen electrode.

After these operations, a small oxygen electrode capable of working practically can be provided [see Fig. 5(g)].

### (VII) Connection to External Meters

When the thus-fabricated small oxygen electrode is used, it is necessary to connect the small oxygen electrode to an exterior amplifier or detector. If a large pad portion is formed as shown in Fig. 1, for example, a fitting portion of an IC socket is taken out, a lead line is attached thereto and the connection is effected through the lead line. In the case where it is thoughts that the pad portion may be immersed in the solution, a lead line (for example, an aluminum line having a diameter of about 50 µm) is bonded to the pad portion, and the pad portion and the lead line portion are insulated with a resin. In the case where a problem arises as regards the bonding strength, a method can be adopted in which even the pad portion is covered with the container substrate (silicon), a through hole is formed in the pad portion as well as in the responding portion. The top end of the lead line is inserted into the pad portion, and the inserted lead line is fixed with an indium or silver paste and further fixed with an insulating resin.

### (VIII) Example of Use of Small Oxygen Electrode

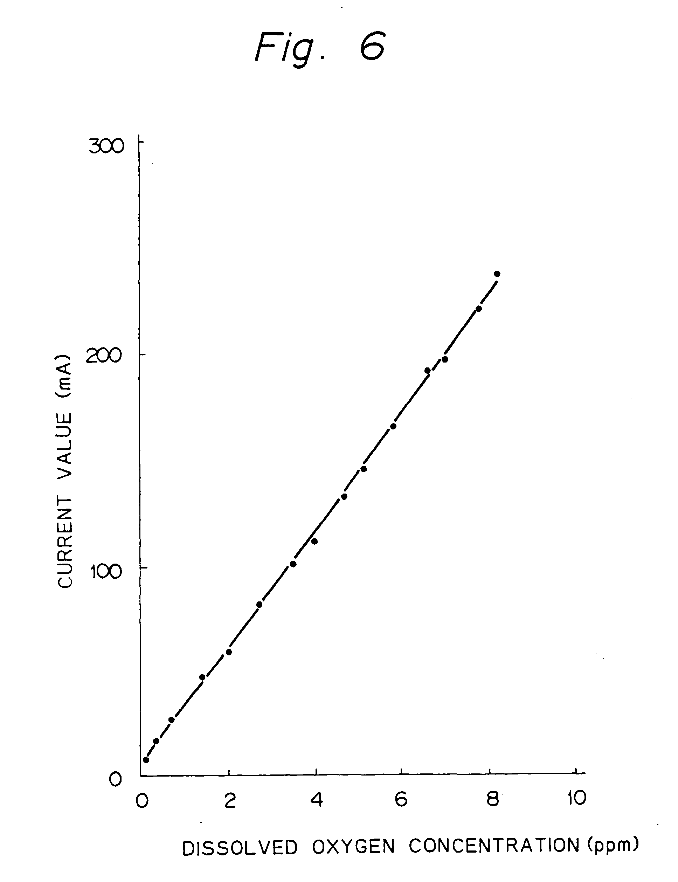

The characteristics of the above-mentioned small oxygen electrode are examined at 25°C in a 10 mM phosphate buffer solution having a pH value of 7.0. The applied voltage is -0.8 V (vs. Ag/AgCl). As compared with the case of direct injection of a 0.1 M KCl electrolyte into the electrode, use of the electrolyte as filled in a calcium alginate gel is advantageous, because a stable output is obtained with reduced noise. The 90% responding time is about 2 minutes, and in the state where the dissolved oxygen concentration is 0%, the residual current value is about 7%. The obtained calibration curve is shown in Fig. 6. The dissolved oxygen concentration is lower than 8.2 ppm (the saturation concentration of dissolved oxygen) and a good linearity is observed.

In the process of the present invention, the step of forming an electrolyte layer can be omitted. Accordingly, an oxygen electrode can be prepared while maintaining a wafer form throughout the process without any particular trouble. Therefore, a reduction of the manufacturing cost can be attained. Moreover, since electrodes are formed on a flat substrate having no deep hole, an electrode pattern can be easily formed. Furthermore, since the electrode can be stored in a dry state free of an electrolyte layer, deterioration of the gas-permeable film is hardly caused. Accordingly, long prior storage is possible and the area for which the gas-permeable film is necessary is considerably restricted, and therefore, the gas-permeable film is hardly damaged. Still further, since a large quantity of the electrolyte can be stored, the life of the electrode can be prolonged.

The method of bonding a fluorine resin film to the oxygen electrode will be described with reference to the following examples.

### Example A

An FEP (fluoroethylene-propylene supplied by Toray) film having a thickness of 12 µm was used as the fluorine resin film. The FEP film was washed with ethanol and dried (first step). The washed sample was immersed for 30 seconds in an agent containing Na (Chemgrip supplied by Norton) to effect reaction, and the sample was washed with acetone three times (second step). Then, the sample was immersed for 30 minutes in a 10% aqueous solution of γ-APTES (silane coupling agent composed of γ-aminopropyltriethoxysilane supplied by Aldrich) at 50°C to effect reaction (third step).

Samples obtained at the respective steps were prepared.

A silicon wafer was used as the substrate, and the untreated silicon wafer (a) and the silicon wafer (b) treated with the silane coupling agent (γ-APTES) were prepared.

The samples obtained at the respective steps were independently placed on the two wafers (a) and (b), and fusion bonding was carried out on a hot plate maintained at 280°C. Then, in an autoclave, high-pressure sterilization was carried out in water at 120°C under 2 atmospheres for 15 minutes, and the fusion bonding state was examined.

The bonding ratio after the sterilization is shown in Table 1. With respect to each sample, 10 test pieces were tested. According to the conventional method [(1)-(a)], the film was readily peeled in water. None of the surface-treated samples, other than the sample (2)-(a), were peeled in water, and strong bonding was attained in these samples. Especially, the sample (2)-(b) had a strong bonding force and showed a high resistance in an adhesive cellophane tape peeling test.

**Table 1**

| Surface Treatment Conditions and Bonding Ratio (%) | | | | |
|---|---|---|---|---|
| Fluorine Resin (Si Wafer) | | Sample (1) at First Step (untreated) | Sample (2) at Second Step (Na agent) | Sample (3) at Third Step (Na Agent & γ-APTES) |
| (a) | Untreated | 0 | 0 | 100 |
| | | | | ⓞ |
| (b) | γ-APTES | 100 | 100 | 100 |
| | | ⓞ | ⓞ | ⓞ |
| Note ⓞ : very strong | | | | |

### Example B

A substrate having a sensor proper, such as a small oxygen electrode, formed thereon was sufficiently subjected to ultrasonic washing in pure water. Then, an FEP (supplied by Toray) film having a thickness of 12 µm was immersed in a metallic sodium-containing treating agent (for example, Chemgrip) to remove fluorine atoms present on the film surface. Then, the FEP film was further treated with a silane coupling agent (γ-APTES).

The surface-treated film was placed on the substrate heated at 270°C to effect fusion bonding. In order to remove bubbles left between the film and the substrate, the substrate to which the film had been fusion-bonded was placed in a vacuum for 5 minutes and immediately, the pressure was returned to atmospheric pressure, and the film-bonded substrate was heated at 270°C again.

According to need, this heating operation was repeated. Thus, the adhesion of the film was improved.

In the case where the film is fusion-bonded to a flat substrate, a sufficient strength can be obtained only by the treatment with an agent containing metallic sodium and a silane coupling agent. However, in the case where the film is bonded to a substrate having convexities and concavities on the surface, such as a small oxygen electrode, bubbles are often left between the film and the substrate. It is conceivable that such bubbles may be inflated during the high-pressure vapor sterilization treatment, thereby to cause peeling of the film, a reduction of the contact area between the film and the substrate and a degradation of the adhesion. In this case, a vacuum treatment at the fusion bonding of the film is effective.

The effects attained by the method of Example B are shown in Table 2.

The film treated with metallic sodium and γ-APTES as described in Example B was fusion-bonded to an untreated silicon wafer, and the vacuum treatment was carried out to complete a small oxygen electrode. Separately, the film treated with an agent containing metallic sodium and γ-APTES was fusion-bonded to an untreated silicon wafer, but the vacuum treatment was not carried out. The obtained small oxygen electrode was used as a comparative electrode. The two electrodes were subjected to high-pressure vapor sterilization and then, the states of the films were examined and compared. The obtained results are shown in Table 2.

**Table 2**

| Effect by Vacuum Treatment at Fusion Bonding | |
|---|---|
| | Film Peel Ratio (%) |
| Untreated Sample | 75 |
| Vacuum-Treated Sample | 0 |

From the results shown in Table 2, it is confirmed that a high effect can be attained by the vacuum treatment.

As is apparent from the foregoing, according to certain embodiments of the present invention, the substrate and the film can be tightly bonded to each other, and peeling of the fluorine resin film from the substrate can be prevented. Especially, in the case where an oxygen electrode is prepared and is then subjected to a severe treatment, such as high-pressure vapor sterilization, according to the method of the present invention including the vacuum treatment, the adhesion of the gas-permeable film is highly improved, and the film does not peel. Thus, excellent effects can be attained according to the present invention.

## Claims

1. An oxygen electrode (A) comprising: a flat electrode substrate (B;30) having at least two electrodes (21,22,23;31) thereon, one of the electrodes being a working electrode (21;31) ; and a gas permeable film (20,27;35), characterised by a container substrate (C;32) which is bonded to said flat electrode substrate (B;30) and has recesses (25,25a;34) formed therein at positions corresponding to the positions of the respective electrodes (21,22,23;31) for containing an electrolyte (26;36) therein, the recess (25a;34) at the position corresponding to the position of said working electrode (21;31) having an aperture (25a;34) extending to the exterior of the container substrate (C;32) opposite to the flat electrode substrate (B;30), said gas-permeable film (20,27;35) covering said aperture.

2. An oxygen electrode (A) as claimed in claim 1, wherein the flat electrode substrate (B;30) has, additionally, a reference electrode (23) thereon, a recess (25) for containing an electrolyte (26;36) therein being formed in the container substrate (C;32) at a position corresponding to the position of the reference electrode (23).

3. An oxygen electrode (A) as claimed in claim 1 or claim 2, wherein the electrodes (21,22,23;31) on said flat electrode substrate (B;30) are separated from one another by such a distance that the electrodes (21,22,23;31) are not influenced by products formed on surfaces of the respective electrodes (21,22,23;31).

4. An oxygen electrode (A) as claimed in claim 1, 2 or 3, wherein said recesses (25,25a;34) are connected to one another by means of conduits for passage of electrolyte (26;36).

5. An oxygen electrode (A) as claimed in any one of claims 1 to 4, wherein said aperture (25a) opens into a recess formed in the surface of the container substrate (C;32) opposite to the flat electrode substrate (B;30), which recess is covered with the gas-permeable film (20,27;35).

6. An oxygen electrode (A) as claimed in any one of claims 1 to 5, wherein the flat electrode substrate (B;30) is a borosilicate glass substrate, a lead glass substrate, a silicon substrate having a film of a borosilicate glass formed on the surface thereof, a silicon substrate having a film of lead glass formed on the surface thereof, a glass substrate having a film of a heat-resisting borosilicate glass formed on the surface thereof, a glass substrate having a film of a lead glass formed on the surface thereof, or a silicon substrate having a thermal oxidation film formed on the surface thereof.

7. An oxygen electrode (A) as claimed in any preceding claim, wherein the electrodes (21,22,23;31) are formed in shallow grooves etched on the flat electrode substrate (B;30).

8. An oxygen electrode (A) as claimed in claim 6 or claim 7, wherein the flat electrode substrate is a (100) plane silicon substrate.

9. An oxygen electrode (A) as claimed in any preceding claim, wherein the gas-permeable film (20,27;35) is a fluoroethylene polymer film.

10. An oxygen electrode (A) as claimed in any one of claims 1 to 9, wherein one end of each electrode (21,22,23;31) is formed for connection to a socket terminal or the like of an IC.

11. A process for the preparation of an oxygen electrode (A), which process comprises: bonding a flat electrode substrate (B;30) having at least two electrodes thereon (21,22,23;31), one of the electrodes being a working electrode (21;31), to a container substrate (C;32) having recesses (25,25a;34) at positions corresponding the positions of the respective electrodes (21,22,23;31), the recess (25a) at a position corresponding to the position of said working electrode (21;31) having an aperture extending to the exterior of the container substrate (C;32) opposite to the flat electrode substrate (B;30); covering said aperture with a gas-permeable film (20,27;35); and introducing an electrolyte (26;36) into said recesses (25,25a;34).

12. A process as claimed in claim 11, wherein the flat electrode substrate (B;30) has, additionally, a reference electrode (23) thereon, a recess (25) for containing an electrolyte (26;36) therein being formed in the container substrate (C;32) at a position corresponding to the position of the reference electrode (23).

13. A process as claimed in claim 11 or claim 12, wherein the oxygen electrode (A) is immersed in electrolyte (26;36) and the electrolyte (26;36) is introduced into the interior of the oxygen electrode (A) by a deaerating operation.

14. A process as claimed in claim 11 or claim 12, wherein the oxygen electrode (A) is immersed in a CaCl₂ solution, the CaCl₂ solution is introduced into the interior of the oxygen electrode (A) by a deaerating operation, the oxygen electrode (A) is baked, and an electrolyte dissolved in a buffer solution containing sodium alginate is introduced into the oxygen electrode (A) by said deaerating operation thereby to obtain a gel.

15. A process as claimed in any one of claims 11 to 14, wherein said gas-permeable film (20,27;35) is a fluorine resin film which is bonded to said container substrate (C;32) by treating the surface of the fluorine resin film with an agent containing metallic sodium, further treating the surface of the fluorine resin film with a silane coupling agent, and fusion-bonding the treated fluorine resin film to said container substrate (C;32) by heating.

16. A process as claimed in any one of claims 11 to 14, wherein said gas-permeable film (20,27;35) is a fluorine resin film which is bonded to said container substrate (C;32) by treating the surface of said container substrate (C;32) with a silane coupling agent, and fusion-bonding the fluorine resin film to the treated surface by heating.

17. A process as claimed in claim 16, wherein said fluorine resin film is a fluorine resin film treated with an agent containing metallic sodium.

18. A process as claimed in claim 16, wherein said fluorine resin film is a fluorine resin film treated with an agent containing metallic sodium and then treated with a silane coupling agent.

19. A process as claimed in claim 15 or claim 18, wherein, after fusion-bonding the treated fluorine resin film to said container substrate (C;32) by heating, the container substrate (C;32) is first allowed to stand in vacuo, is then placed under atmospheric pressure, and then fusion bonding is repeated.

20. A process as claimed in claim 15 or claim 18, wherein fusion-bonding of the fluorine resin film to said container substrate (C;32) by heating is carried out in vacuo, said container substrate (C;32) is then allowed to stand in vacuo, and fusion bonding in vacuo is then repeated.

## Patentansprüche

1. Sauerstoff-Elektrode (A), mit: einem flachen Elektroden-Substrat (B; 30) mit zumindest zwei Elektroden (21, 22, 23; 31) darauf, wobei eine der Elektroden eine Arbeitselektrode (21; 31) ist; und einem gasdurchlässigen Film (20, 27; 35), gekennzeichnet durch ein Behälter-Substrat (C; 32), das an das flache Elektroden-Substrat (B; 30) gebunden ist, und Vertiefungen (25, 25a; 34) aufweist, welche darin an Positionen gebildet sind, die den Positionen der jeweiligen Elektroden (21, 22, 23; 31) entsprechen, um darin einen Elektrolyten (26; 36) zu enthalten, wobei die Vertiefung (25a; 34) an der Position, die der Position der Arbeitselektrode (26; 36) entspricht, eine Apertur (25a; 34) aufweist, die zur Außenseite des Behälter-Substrats (C; 32) gegenüber dem flachen Elektroden-Substrat (B; 30) verläuft, wobei der gasdurchlässige Film (20, 27; 35) die Apertur bedeckt.

2. Sauerstoff-Elektrode (A) nach Anspruch 1, bei welcher das flache Elektroden-Substrat (B; 30) zusätzlich eine Referenz-Elektrode (23) darauf aufweist, wobei eine Vertiefung (25), um darin einen Elektrolyten (26; 36) zu enthalten, im Behälter-Substrat (C; 23) an einer Position gebildet ist, die der Position der Referenz-Elektrode (23) entspricht.

3. Sauerstoff-Elektrode (A) nach Anspruch 1 oder Anspruch 2, bei welcher die Elektroden (21, 22, 23; 31) auf dem flachen Elektroden-Substrat (B; 30) voneinander durch eine derartige Distanz getrennt sind, daß die Elektroden (21, 22, 23; 31) von an den Oberflächen der entsprechenden Elektroden (21, 22, 23; 31) gebildeten Produkten nicht beeinflußt werden.

4. Sauerstoff-Elektrode (A) nach Anspruch 1, 2 oder 3, bei welcher die Vertiefungen (25, 25a; 34) durch Leitungen für den Durchgang des Elektrolyten (26; 36) miteinander verbunden sind.

5. Sauerstoff-Elektrode (A) nach einem der Ansprüche 1 bis 4, bei welcher sich die Apertur (25a) in eine Vertiefung öffnet, die in der Oberfläche des Behälter-Substrats (C; 32) gegenüber dem flachen Elektroden-Substrat (B; 30) gebildet ist, welche Vertiefung mit dem gasdurchlässigen Film (20, 27; 35) bedeckt ist.

6. Sauerstoff-Elektrode (A) nach einem der Ansprüche 1 bis 5, bei welcher das flache Elektroden-Substrat (B; 30) ein Borsilikatglas-Substrat, ein Bleiglas-Substrat, ein Silicium-Substrat mit einem auf der Oberfläche davon gebildeten Borsilikatglas-Film, ein Silicium-Substrat mit einem auf der Oberfläche davon gebildeten Bleiglas-Film, ein Glas-Substrat mit einem auf der Oberfläche davon gebildeten wärmebeständigen Borsilikatglas-Film, ein Glas-Substrat mit einem an der Oberfläche davon gebildeten Bleiglas-Film oder ein Silicium-Substrat mit einem auf der Oberfläche davon gebildeten Wärmeoxidationsfilm ist.

7. Sauerstoff-Elektrode (A) nach einem der vorhergehenden Ansprüche, bei welcher die Elektroden (21, 22, 23; 31) in flachen Rillen gebildet sind, die in das flache Elektroden-Substrat (B; 30) geätzt sind.

8. Sauerstoff-Elektrode (A) nach Anspruch 6 oder Anspruch 7, bei welcher das flache Elektroden-Substrat ein (100) ebenes Silicium-Substrat ist.

9. Sauerstoff-Elektrode (A) nach einem der vorhergehenden Ansprüche, bei welcher der gasdurchlässige Film (20, 27; 35) ein Fluorethylenpolymer-Film ist.

10. Sauerstoff-Elektrode (A) nach einem der Ansprüche 1 bis 9, bei welcher ein Ende jeder Elektrode (21, 22, 23; 31) für eine Verbindung mit einem Buchsenanschluß oder dgl. einer IC ausgebildet ist.

11. Verfahren zur Herstellung einer Sauerstoff-Elektrode (A), welches Verfahren umfaßt: Binden eines flachen Elektroden-Substrats (B; 30) mit zumindest zwei Elektroden (21, 22, 23; 31) darauf, wobei eine der Elektroden eine Arbeitselektrode (21; 31) ist, an ein Behälter-Substrat (C; 32) mit Vertiefungen (25, 25a; 34) an Positionen, die den Positionen der jeweiligen Elektroden (21, 22, 23; 31) entsprechen, wobei die Vertiefung (25a) an einer Position, die der Position der Arbeitselektrode (21; 31) entspricht, eine Apertur aufweist, die zur Außenseite des Behälter-Substrats (C; 32) gegenüber dem flachen Elektroden-Substrat (B; 30) verläuft; Bedecken der Apertur mit einem gasdurchlässigen Film (20, 27; 35); und Einführen eines Elektrolyten (26; 36) in die Vertiefungen (25, 25a; 34).

12. Verfahren nach Anspruch 11, wobei das flache Elektroden-Substrat (B; 30) zusätzlich eine Referenz-Elektrode (23) darauf aufweist, wobei eine Vertiefung (25), um darin einen Elektrolyten (26; 36) zu enthalten, im Behälter-Substrat (C; 23) an einer Position gebildet wird, die der Position der Referenz-Elektrode (23) entspricht.

13. Verfahren nach Anspruch 11 oder Anspruch 12, bei welchem die Sauerstoff-Elektrode (A) in den Elektrolyten (26; 36) eingetaucht wird, und der Elektrolyt (26; 36) in das Innere der Sauerstoff-Elektrode (A) durch einen Entlüftungsvorgang eingeführt wird.

14. Verfahren nach Anspruch 11 oder Anspruch 12, bei welchem die Sauerstoff-Elektrode (A) in eine CaCl₂-Lösung eingetaucht wird, die CaCl₂-Lösung in das Innere der Sauerstoff-Elektrode (A) durch einen Entlüftungsvorgang eingeführt wird, die Sauerstoff-Elektrode (A) gebacken wird, und ein Elektrolyt, der in einer Natriumalginat enthaltenden Puffer-Lösung gelöst ist, in die Sauerstoff-Elektrode (A) durch den Entlüftungsvorgang eingeführt wird, um dadurch ein Gel zu erhalten.

15. Verfahren nach einem der Ansprüche 11 bis 14, bei welchem der gasdurchlässige Film (20, 27; 35) ein Fluorharz-Film ist, der an das Behälter-Substrat (C; 32) gebunden wird, indem die Oberfläche des Fluorharz-Films mit einem metallisches Natrium enthaltenden Mittel behandelt wird, die Oberfläche des Fluorharz-Films weiter mit einem Silan-Kopplungsmittel behandelt wird, und der behandelte Flourharz-Film an das Behälter-Substrat (C; 32) durch Erhitzen schmelzgebunden wird.

16. Verfahren nach einem der Ansprüche 11 bis 14, bei welchem der gasdurchlässige Film (20, 27; 35) ein Fluorharz-Film ist, der an das Behälter-Substrat (C; 32) gebunden wird, indem die Oberfläche des Behälter-Substrats (C; 32) mit einem Silan-Kopplungsmittel behandelt wird, und der Fluorharz-Film an die behandelte Oberfläche durch Erhitzen schmelzgebunden wird.

17. Verfahren nach Anspruch 16, bei welchem der Flourharz-Film ein Fluorharz-Film ist, der mit einem metallisches Natrium enthaltenen Mittel behandelt wird.

18. Verfahren nach Anspruch 16, bei welchem der Flourharz-Film ein Fluorharz-Film ist, der mit einem metallisches Natrium enthaltenen Mittel behandelt wird, und dann mit einem Silan-Kopplungsmittel behandelt wird.

19. Verfahren nach Anspruch 15 oder Anspruch 18, bei welchem, nach dem Schmelzbinden des behandelten Flourharz-Films an das Behälter-Substrat (C; 32) durch Erhitzen, das Behälter-Substrat (C; 32) zuerst im Vakuum stehen gelassen wird, dann unter Atmosphärendruck gesetzt wird, und dann das Schmelzbinden wiederholt wird.

20. Verfahren nach Anspruch 15 oder Anspruch 18, bei welchem das Schmelzbinden des Flourharz-Films an das Behälter-Substrat (C; 32) durch Erhitzen im Vakuum durchgeführt wird, wobei das Behälter-Substrat (C; 32) dann im Vakuum stehen gelassen wird, und dann das Schmelzbinden im Vakuum wiederholt wird.

## Revendications

1. Electrode à oxygène (A) comprenant : un substrat d'électrode plat (B ; 30) présentant au moins deux électrodes (21, 22, 23 ; 31) sur son dessus, une des électrodes étant une électrode de travail (21 ; 31) ; et un film perméable au gaz (20, 27 ; 35), caractérisée par un substrat à réservoir (C ; 32) qui est lié audit substrat d'électrode plat (B ; 30) et présente des creux (25, 25a ; 34) formés dans celui-ci à des endroits correspondant aux positions des électrodes respectives (21, 22, 23 ; 31) pour contenir un électrolyte (26 ; 36) dans ceux-ci, le creux (25a ; 34) à l'endroit correspondant à la position de ladite électrode de travail (21 ; 31) présentant une ouverture (25a ; 34) s'étendant vers l'extérieur du substrat à réservoir (C ; 32) opposé au substrat d'électrode plat (B ; 30), ledit film perméable au gaz (20, 27 ; 35) couvrant ladite ouverture.

2. Electrode à oxygène (A) selon la revendication 1, dans laquelle le substrat d'électrode plat (B ; 30) présente en outre une électrode de référence (23) sur son dessus, un creux (25) pour contenir un électrolyte (26 ; 36) dans celui-ci étant formé dans le substrat à réservoir (C ; 32) à un endroit correspondant à la position de l'électrode de référence (23).

3. Electrode à oxygène (A) selon la revendication 1 ou la revendication 2, dans laquelle les électrodes (21, 22, 23 ; 31) sur ledit substrat d'électrode plat (B ; 30) sont séparées l'une de l'autre par une distance telle que les électrodes (21, 22, 23 ; 31) ne sont pas influencées par des produits formés sur les surfaces des électrodes respectives (21, 22, 23 ; 31).

4. Electrode à oxygène (A) selon la revendication 1, 2 ou 3, dans laquelle lesdits creux (25, 25a ; 34) sont raccordés l'un à l'autre au moyen de conduits pour le passage d'électrolyte (26 ; 36).

5. Electrode à oxygène (A) selon l'une quelconque des revendications 1 à 4, dans laquelle ladite ouverture (25a) s'ouvre dans un creux formé dans la surface du substrat à réservoir (C ; 32) opposée au substrat d'électrode plat (B ; 30), lequel creux est recouvert avec le film perméable au gaz (20, 27 ; 35).

6. Electrode à oxygène (A) selon l'une quelconque des revendications 1 à 5, dans laquelle le substrat d'électrode plat (B ; 30) est un substrat en verre de borosilicate, un substrat en verre plombeux, un substrat en silicium présentant un film d'un verre de borosilicate formé sur la surface de celui-ci, un substrat en silicium présentant un film de verre plombeux formé sur la surface de celui-ci, un substrat en verre présentant un film d'un verre de borosilicate résistant à la chaleur formé sur la surface de celui-ci, un substrat en verre présentant un film d'un verre plombeux formé sur la surface de celui-ci ou un substrat en silicium présentant un film d'oxydation thermique formé sur la surface de celui-ci.

7. Electrode à oxygène (A) selon l'une quelconque des revendications précédentes, dans lequel les électrodes (21, 22, 23 ; 31) sont formées dans des rainures étroites gravées sur le substrat d'électrode plat (B ; 30).

8. Electrode à oxygène (A) selon la revendication 6 ou la revendication 7, dans laquelle le substrat d'électrode plat est un substrat en silicium plan (100).

9. Electrode à oxygène (A) selon l'une quelconque des revendications précédentes, dans laquelle le film perméable au gaz (20, 27 ; 35) est un film de polymère de fluoroéthylène.

10. Electrode à oxygène (A) selon l'une quelconque des revendications 1 à 9, dans laquelle une extrémité de chaque électrode (21, 22, 23 ; 31) est formée pour un raccordement à une borne de prise de courant ou semblable d'un IC (circuit intégré).

11. Procédé pour la préparation d'une électrode à oxygène (A), lequel procédé comprend : la liaison d'un substrat d'électrode plat (B ; 30) présentant au moins deux électrodes sur son dessus (21, 22, 23 ; 31), une des électrodes étant une électrode de travail (21 ; 31), à un substrat à réservoir (C ; 32) présentant des creux (25, 25a ; 34) à des endroits correspondant aux positions des électrodes respectives (21, 22, 23 ; 31), le creux (25a) à un endroit correspondant à la position de ladite électrode de travail (21 ; 31) présentant une ouverture s'étendant vers l'extérieur du substrat à réservoir (C ; 32) opposé au substrat d'électrode plat (B ; 30) ; la couverture de ladite ouverture avec un film perméable au gaz (20, 27 ; 35) ; et l'introduction d'un électrolyte (26 ; 36) dans lesdits creux (25, 25a ; 34).

12. Procédé selon la revendication 11, dans lequel le substrat d'électrode plat (B ; 30) présente de plus une électrode de référence (23) sur son dessus, un creux (25) pour contenir un électrolyte (26 ; 36) dans celui-ci étant formé dans le substrat à réservoir (C ; 32) à un endroit correspondant à la position de l'électrode de référence (23).

13. Procédé selon la revendication 11 ou la revendication 12, dans lequel l'électrode à oxygène (A) est immergée dans un électrolyte (26 ; 36) et l'électrolyte (26 ; 36) est introduit à l'intérieur de l'électrode à oxygène (A) par une opération de désaération.

14. Procédé selon la revendication 11 ou la revendication 12, dans lequel l'électrode à oxygène (A) est immergée dans une solution de CaCl₂, la solution de CaCl₂ est introduite à l'intérieur de l'électrode à oxygène (A) par une opération de désaération, l'électrode à oxygène (A) est cuite, et un électrolyte dissous dans une solution tampon contenant de l'alginate de sodium est introduit dans l'électrode à oxygène (A) par ladite opération de désaération pour obtenir par là un gel.

15. Procédé selon l'une quelconque des revendications 11 à 14, dans lequel ledit film perméable au gaz (20, 27 ; 35) est un film de résine au fluor qui est lié audit substrat à réservoir (C ; 32) en traitant la surface du film de résine au fluor avec un agent contenant du sodium métallique, en traitant encore la surface du film de résine au fluor avec un agent de couplage de silane, et en liant par fusion le film de résine au fluor traité audit substrat à réservoir (C ; 32) par chauffage.

16. Procédé selon l'une quelconque des revendications 11 à 14, dans lequel ledit film perméable au gaz (20, 27 ; 35) est un film de résine au fluor qui est lié audit substrat à réservoir (C ; 32) en traitant la surface dudit substrat à réservoir (C ; 32) avec un agent de couplage de silane et en liant par fusion le film de résine au fluor à la surface traitée par chauffage.

17. Procédé selon la revendication 16, dans lequel ledit film de résine au fluor est un film de résine au fluor traité avec un agent contenant du sodium métallique.

18. Procédé selon la revendication 16, dans lequel ledit film de résine au fluor est un film de résine au fluor traité avec un agent contenant du sodium métallique et traité ensuite avec un agent de couplage de silane.

19. Procédé selon la revendication 15 ou la revendication 18, dans lequel après la liaison par fusion du film de résine au fluor traité audit substrat à réservoir (C ; 32) par chauffage, on laisse dans un premier temps reposer sous vide le substrat à réservoir (C; 32) et on le place ensuite à pression atmosphérique, et on répète ensuite la liaison par fusion.

20. Procédé selon la revendication 15 ou la revendication 18, dans lequel on réalise la liaison par fusion du film de résine au fluor audit substrat à réservoir (C ; 32) par chauffage sous vide, on laisse ensuite reposer sous vide ledit substrat à réservoir (C ; 32) et on répète ensuite la liaison par fusion sous vide.
